# EUROPEAN PATENT APPLICATION

(11) **EP 1 832 930 A2**
(43) Date of publication of application: **12.09.2007**
(21) Application number: 05850061.2
(22) Date of filing: 21.12.2005
(51) Int. Cl.: G03F 7/20

(54) **APERTURE DIFFRACTION INTERFEROMETER (ADI) FOR THE INSPECTION AND MEASUREMENT OF OPHTHALMIC OPTICAL COMPONENTS**

(30) Priority: 23.12.2004 ES 200500019
(71) Applicant: UNIVERSIDADE DE SANTIAGO DE COMPOSTELA, 15782 Santiago de Compostela (ES)
(72) Inventor: ACOSTA PLAZA, Eva, UNIV. DE SANTIAGO DE COMPOSTELA, E-15782 Santiago De Compostela (ES); CHAMADOIRA HERMIDA, Sara., Uni Santiago De Compostela, E-15782 Santiago De Compostela (ES)
(74) Representative: Carvajal y Urquijo, Isabel
(86) International application number: PCT/ES2005/000709
(87) International publication number: WO 2006/070037

(57) **Abstract**

The invention relates to an aperture diffraction interferometer (ADI) for the inspection and measurement of ophthalmic optical components. The invention comprises: a radiation source (1), a lens system (3), a support that is suitable for any type of ophthalmic component being tested (4), a focusing lens (5), a semi-transparent sheet comprising an aperture (6), and an image-acquisition system (10). The aforementioned aperture generates a quasi-spherical reference wave which interferes with the portion of the beam that passes outside same. The interference pattern provides the optical characteristics of the component, including defects. The inventive interferometer is robust and can be easily aligned owing to the fact that the size of the aperture in the semi-transparent sheet is greater than that defined by diffraction of the wave incident thereon.

## Description

### Field of the Art

The invention consists of an aperture diffraction interferometer for the inspection, analysis and measurement of the optical properties of different ophthalmic optical components, such as lenses, rigid and soft contact lenses, intraocular lenses, etc. The interferometer is useful for carrying out point-by-point measurements of the power of the components to be characterized.

### State of the Art

Optical metrology is the characterization of systems, surfaces and materials by means of the use of optical measurement methods. Interferometry stands out among them due to its efficiency for measuring the quality of optical elements such as lenses, mirrors or combined lens and/or mirror systems.

Different types of interferometers based on lateral shift techniques or based on the Michelson or Mach-Zenhder design (E. Hetch, Óptica, Chap. 9., Adison Wesley, Madrid, 2000) can be used to measure optical aberrations; but due to the need for creating a reference wave by means of splitting the beam, their implementation in a compact and robust apparatus for commercial use is virtually impossible.

Common path interferometers are ideal candidates for solving the previous problem. Among them, the point diffraction interferometer (PDI), (R.N. Smartt and J. Strong, J. Opt. Soc. Am. 62, 737 (1972)) allows generating ideal spherical reference waves by means of the diffraction caused by extremely small holes, called points (points being understood as those holes having diameters smaller than that of the Airy figure of the beam incident thereon) made in semi-transparent sheets. The passage of light through beam splitting optics (mirrors, beam splitters, etc.), which would further entail aberrations, is thus prevented.

Apart from the simplicity of its operating principle, another advantage of PDI is the interpretation of the interferogram, which in many cases is trivial, further making it attractive as an inspection device.

Modifications (K.A. Goldberg, US Patent No. 6,307,635; J.E. Millerd, et al. Procc. SPIE Vol. 5531, 264 (2004)) have been added to the PDI originally proposed by Smartt (R.N. Smartt *op. cited),* which modifications do not alter its initial simplicity and allow obtaining in the most sophisticated PDls phase recovery accuracy of the order of λ/300-λ/400, where λ is the wavelength used.

In addition, ophthalmic components are optical components that are integrated in a physiological image-forming process and therefore, the characterization requirements differ to a great extent from other optical components, both simple (planar surfaces, lenses, mirrors, etc,) and more complex (photographic or microscope lenses, etc.) optical components. Thus, for example taking into account that the eye only uses a small fraction of the ophthalmic lenses in a small instant of time for central vision, the lens only needs to provide quality in a region with a diameter that can approximately be compared to that of the pupil of the eye, not the eye as a whole.

The progress in the techniques for manufacturing ophthalmic components has allowed producing increasingly sophisticated intra- and extraocular optical components which correct defocusing and astigmatism in all their pathological complexity through spherical, toric, aspherical, bifocal and multifocal lenses and contact lenses. Furthermore, the recent development of efficient and accurate methods for measuring the group of high-order ocular aberrations, for example with Shack-Hartmann sensors (J. Liang et al. J. Opt. Soc. Am. A 14,2873 (1997)); or by means of X-ray tracing (R. Navarro et al. Optom. Vision Sci. 74, 540 (1997)) has given rise to the development of new ophthalmic components (N. Chateau, et al. J Opt. Soc. Am. A 15, 2589 (1998); N. López et al. J Opt. Soc. Am. A 15, 2563 (1998); S. Bará, et al. Patent No. ES2163369) which allow compensating higher-order aberrations, a tendency to manufacture personalized corrective lenses being able to foreseen in the near future.

New measurement techniques have been developed together with the evolution of the manufacture of new ophthalmic optical components because conventional front focometers (D.B. Henson, Optometric Instrumentation, Chap. 11, Butterworths, London (1983)) have little or no capacity to determine the optical characteristics of all the new elements for correcting vision defects (in most cases it is impossible to reliably determine the power, even in the center). Therefore, devices providing a power map of increasingly wider regions of ophthalmic components, providing accurate and reproducible results, are necessary.

As previously indicated, the requirements for characterizing ophthalmic components greatly differ from other optical components and it is convenient to emphasize that the necessary accuracy for characterizing them is less than that necessary to characterize optical components in general. In most optical components, the admitted tolerances are expressed in fractions of the wavelength used. However, tolerances of the order of one or even several wavelengths are admitted in ophthalmic components.

There are only two commercial instruments to date which also allow accurately characterizing new ophthalmic optical components: Visionix 2001 (www.visionix.com), using a Shack-Hartmann sensor the microlens array of which provides in the order of 500 sampling points; and Rotlex Contest (www.rotlex.com) based on Moire deflectometry, which, although it has a greater spatial resolution (35000 sampling points), needs to be used with a computer like the previous device (because it does not directly provide phase maps but indirect measurements) even for a simple subjective inspection which does not need numerical results and which allows, for example, classifying simple components or detecting defects.

### Description of the Invention

The object of the present invention is the implementation of an aperture diffraction interferometer (ADI), an interferometer with medium accuracy based on the operating principle of the point diffraction interferometer, PDI. The ADI differs from the PDI in that the spherical reference wave is generated by means of a hole the diameter of which is greater than that of the Airy figure of the beam incident thereon. An ideal spherical wave is therefore not produced, but rather a quasi-spherical wave which is sufficient to measure ophthalmic components, although it obviously reduces the accuracy of the measurements.

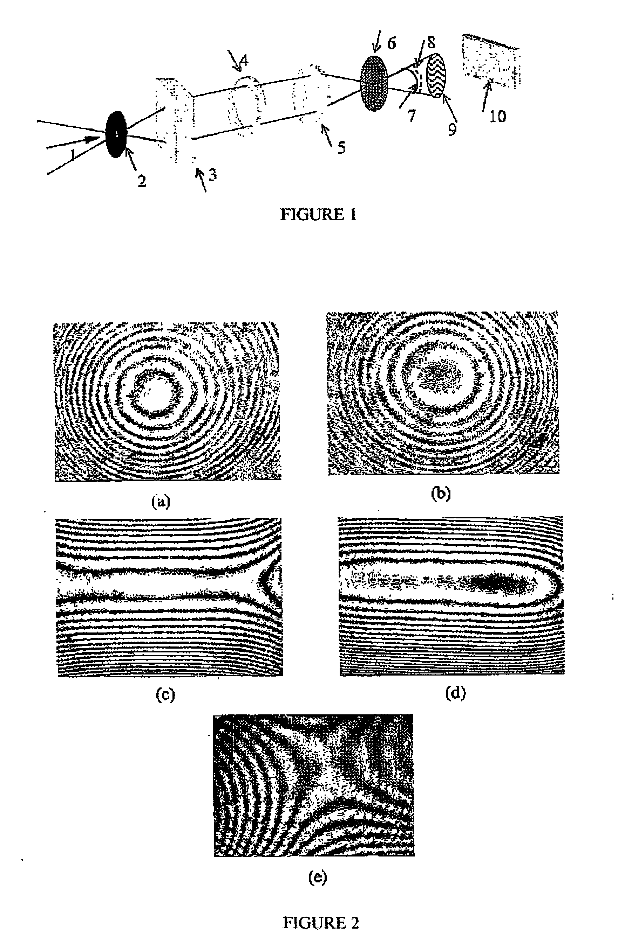

Figure 1 shows the basic version of the invention, comprising: an electromagnetic radiation source (1); a spatial filter (2); a converging lens (3) producing a collimated beam at its exit; a support (4) for the component; a converging lens (5) in the focal plane of which the semi-transparent sheet with the aperture (6) is located to produce the reference wave.

Understanding that the spherical and cylindrical components of the ophthalmic component can be considered as second-order aberrations with respect to a planar wavefront, then there is essentially an Airy interference pattern in the focal plane of the lens (5) that is affected by the low and high-order aberrations of the component. The portion of radiation passing through the aperture generates a quasi-spherical wave (7) which, together with the rest of the wave (8) traversing the semi-transparent membrane, will give rise to an interferogram (9) containing all the information of the focusing characteristics of the ophthalmic component to be analyzed. The interference patterns can be collected in a screen or in a CCD (Charged Coupled Device) camera (10) for example.

The accuracy of the interferometer is regulated not only by the size of the aperture but also by the transmittance of the semi-transparent region, which must be suitably chosen according to the diameter of the aperture used and to the number of aberration wavelengths to be detected.

Although the use of apertures instead of points reduces the accuracy of the device since the contrast of the peripheral fringes decreases, this loss of accuracy is compensated by:
a) an increase of the dynamic range of the interferometer, i.e. it allows obtaining interferograms with a good contrast of large amounts of aberrations; and
b) an easy alignment, which makes the ADI a robust measurement device.

Once the hole diameter-transmittance ratio gives rise to interferograms with a suitable visibility, their interpretation is simple. Interferograms are the interference pattern produced by a spherical wave originating in the aperture and the wave emerging from the focusing lens. Thus, for example, if the component being tested is illuminated with a collimated light beam and the lens is spherical, the fringes will be concentric circles the spacing of which follows a quadratic law proportional to the power of the lens. If the lens is cylindrical, the fringes will be linear; and if it is sphero-cylindrical, the fringes will be either ellipses (generally rotated ellipses) if the two powers have the same sign, or hyperbolas (generally rotated hyperbolas) if they have opposite signs (their spacing also following a quadratic law). The shift of the interference patterns of the axis of the system provides the prismatic power of the components.

The lens (3) can be substituted with a lens system, which lens partially compensates the spherical and/or cylindrical components of the ophthalmic component to be measured. The dynamic range of the interferometer can also be increased with this differential form of measurement. The lens forming the system can be both cylindrical and spherical and have a variable power of the type, for example, of Alvarez and Humphrey lenses (D.B. Henson, "Optometric Instrumentation", Chap. 8, Butterworths & Co., London, 1983).

A novelty in the design of the semi-transparent sheet containing the aperture is also included in the interferometric device: Sheets manufactured with lithographic techniques which, by means of depositing different materials on a glass substrate, can add a phase difference to the reference wave and/or to the wave being analyzed to prevent the need for phase shifting mechanisms. This will allow producing fringe patterns with a central maximum (or minimum) for lenses with two positive curvatures, or minimum (or maximum) for lenses with two negative curvatures. The application of the invention for simple visual inspection is evident.

The invention will be described below with examples so that it can be better understood; but it must be stated that variations may be made in the basic device and implemented in other applications for phase object measurements. Phase objects are understood as those that do not absorb or reflect light, but rather they alter the phase of the light beam incident thereon or they deflect it, such as photoresin sheets, liquids or solid having variations in their refractive index.

The objectives of the ADI include the inspection of components (classification and viewing of defects), carrying out objective and accurate measurements of the lenses available on the market, and their use in the research and development of new optical components.

### Description of the Drawings

Figure 1 shows a diagram of the point diffraction interferometer.
Figure 2 shows interferograms of different ophthalmic lenses.
   a) Positive Spherical,
   b) Negative Spherical
   c) Positive Cylindrical
   d) Negative Cylindrical
   e) Positive Sphere, Negative Cylinder
Figure 3 shows interferograms of soft contact lenses (in saline solution).
   a) Positive Spherical
   b) Negative Spherical
   c) Toric
Figure 4 shows interferograms of rigid contact lenses.
   a) Defective Lens
   b) Positive Spherical

### Embodiment

The ophthalmic components (spherical, cylindrical, toric, bifocal, multifocal, progressive contact lenses and lenses) are the optical elements in which the invention has originally been applied and whereby such invention is illustrated. Therefore, although the viability of the ADI will be described based on a prototype and specific details of the implementation will be provided, it is obvious that the invention set forth can be carried out without being limited to the details described herein.

### EXAMPLE

A low-power Helium-Neon laser (wavelength: 633 mm) was used as a light source in the experiment. The spherical wave for illuminating the system was produced by means of a commercial 60X microscope lens and it was then collimated with a converging lens. The support for the components is a planar platform with a hole 4 cm in diameter. The ophthalmic lenses were placed directly on the hole, which allowed centering them. The soft contact lenses were placed inside an optical glass cell containing saline solution and the base of which was greater than the diameter of the hole of the support. The rigid contact lenses were placed in a microscope slide which was placed on the support. A converging lens was then placed, in the focal plane of which the semi-transparent sheet was placed with the hole centered on the focal spot.

The semi-transparent sheets were manufactured by means of depositing a chromium metal layer and another chromium oxide layer, thus achieving a desired optical density. Circular apertures with different diameters were etched in the sheets by means of photolithographic techniques.

The interferogram images were acquired with a CCD Pulnix Model TM6 AS camera.

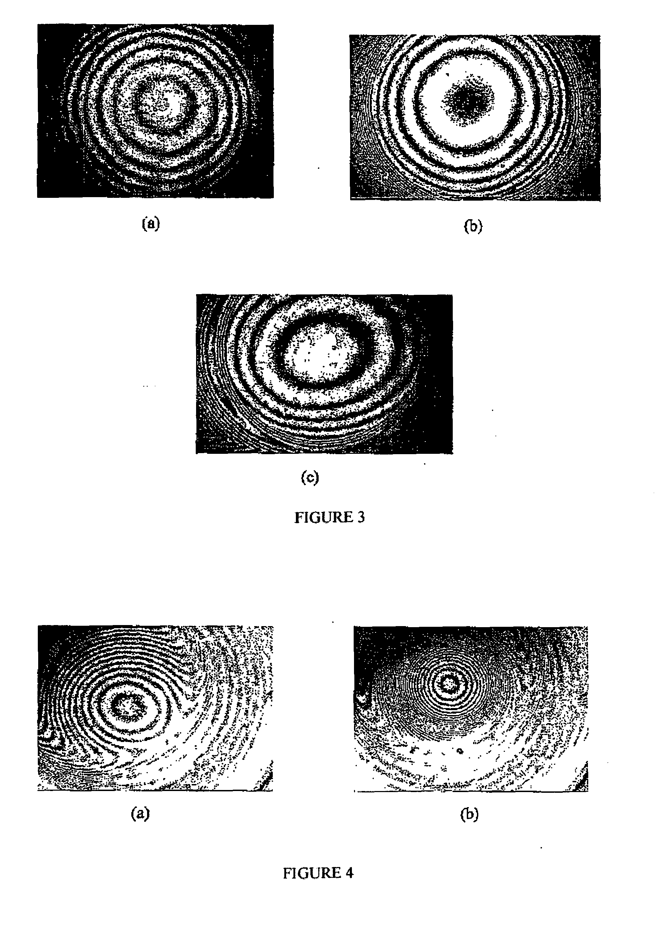

Figures 2, 3 and 4 shows interferograms obtained for different types of ophthalmic components.

## Claims

1. An aperture diffraction interferometer, ADI, for the inspection and measurement of ophthalmic optical components **characterized in that** it comprises:
- A radiation source (1), which can be both a monochromatic and polychromatic source
- A filter (2) for causing special coherence, if necessary, depending on the type of radiation source
- A group of spherical and cylindrical lenses (3) which, by means of their axial shift and rotations, completely or partially compensate the astigmatism and the defocusing of the ophthalmic component to be **characterized**
- A support that is suitable for the ophthalmic component to be measured (4)
- A focusing lens (5)
- A semi-transparent sheet (6), located in the focal plane of the lens (5), **characterized by** having an aperture with a diameter greater than the diameter of the Airy spot caused by the lens (5) and which has been manufactured such that it can further add an additional phase which allows determining positive or negative curvatures to both the reference wave (7) and to the wave to be measured (8)
- A detector (10) for capturing the interferogram (9) produced by the reference wave and the test wave

2. An aperture diffraction interferometer according to claim 1, **characterized in that** the group of lenses (3) are variable lenses which, by means of controlling their transverse translation, produce a wave completely or partially compensating the vergence of the ophthalmic component.

3. An aperture diffraction interferometer according to the previous claims, **characterized in that** the semi-transparent sheet is slightly distanced from the focal plane of the lens (5).

4. An aperture diffraction interferometer according to the previous claims, **characterized by** the incorporation of a prism system between (3) and (4) or between (4) and (5), which prisms allow completely or partially compensating the prismatic effect of the components.

5. The use of the aperture diffraction interferometer according to the previous claims, for its application to phase object measurement.
